(19) Europäisches Patentamt
European Patent Office
Office européen des brevets

(11) EP 0 798 326 A2

# (12) EUROPÄISCHE PATENTANMELDUNG

(43) Veröffentlichungstag:
**01.10.1997 Patentblatt 1997/40**

(21) Anmeldenummer: **97104220.5**

(22) Anmeldetag: **13.03.1997**

(51) Int. Cl.[6]: **C08G 64/16**, C08G 64/30, C08G 64/42, C08K 5/15, C08L 69/00

(84) Benannte Vertragsstaaten:
**BE DE ES IT NL**

(30) Priorität: **26.03.1996 DE 19611853**

(71) Anmelder: **BAYER AG**
**51368 Leverkusen (DE)**

(72) Erfinder:
- **Meier, Helmut-Martin, Dr.**
  **40883 Ratingen (DE)**
- **Ebert, Wolfgang, Dr.**
  **47800 Krefeld (DE)**

## (54) Modifizierte Polycarbonate

(57) Gegenstand der vorliegenden Erfindung sind durch spezielle Ethylencarbonate modifizierte Polycarbonate, ihre Herstellung und Verwendung in der Optik.

EP 0 798 326 A2

## Beschreibung

Gegenstand der vorliegenden Erfindung sind thermoplastische, aromatische Polycarbonate mit einem $\overline{M}w$ (Gewichtsmittelmolekulargewicht, ermittelt durch Lichtstreuung oder durch Gelchromatographie) von 12 000 bis 80 000, vorzugsweise von 15 000 bis 60 000, die dadurch gekennzeichnet sind, daß sie mit Ethylencarbonat, das durch einen oder zwei $C_6$-$C_{18}$-Arylreste substituiert ist, in Mengen von 0,01 mol-% bis 70 mol-%, vorzugsweise von 0,1 mol-% bis 50 mol-% und insbesondere von 1 mol-% bis 30 mol-%, bezogen jeweils auf 100 Mole aromatische Carbonatstruktureinheiten des aromatischen Polycarbonats, modifiziert sind.

Im Falle von zwei Arylsubstituenten stehen diese vorzugsweise in α,β-Stellung im Ethylencarbonat.

Bevorzugte, erfindungsgemäß einzusetzende Ethylencarbonate sind solche der Formel (I)

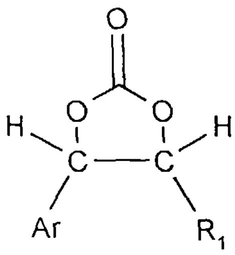

(I),

worin Ar ein $C_6$-$C_{18}$-Arylrest ist, der noch durch Cl, Br, OH, $NO_2$, $-N(R_2)_2$,

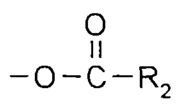

,

NCO, CN, $-O-R_2$, $-S-R_2$, Cyclohexyl oder Phenyl substituiert ist,
wobei $R_2$ $C_1$-$C_6$-Alkyl, Cyclohexyl oder Phenyl ist, und worin $R_1$ die Bedeutung von Ar hat und zusätzlich H oder $C_1$-$C_{36}$-Alkyl ist.

Beispiele für Ar-Reste sind

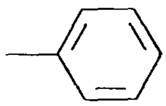 , 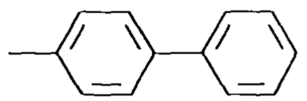 , 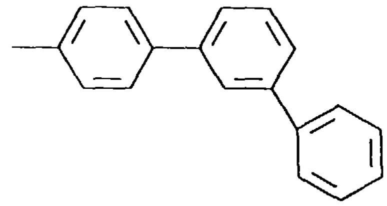 ,

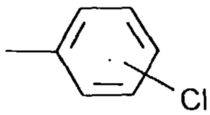 , 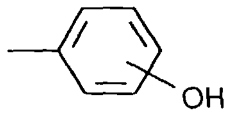 , 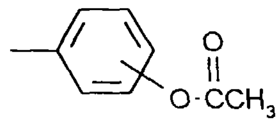 ,

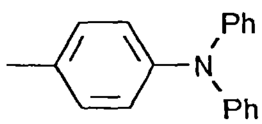 , 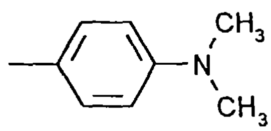 , 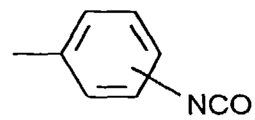 ,

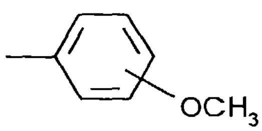 und 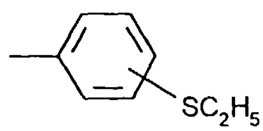 .

Bevorzugte Verbindungen (I) sind solche, in denen Ar Phenyl und $R_1$ H oder Phenyl sind.

Die erfindungsgemäß modifizierten Polycarbonate sind doppelbrechungsfrei und somit insbesondere zur Herstellung von Formteilen für optische Zwecke, insbesondere von Datenspeichern und Compact Discs geeignet.

Gegenstand der vorliegenden Erfindung ist somit außerdem die Verwendung der erfindungsgemäß modifizierten Polycarbonate zur Herstellung von Formteilen für optische Zwecke, insbesondere von Datenspeichern und Compact Discs.

Gemäß deutscher Patentanmeldung No. 19545330.1 (Le A 30 678) vom 05.12.1995 werden cyclische Carbonate von aliphatischen Polyalkoholen thermoplastischen Polycarbonaten als Entformungsmittel zugesetzt. Die Verwendung dieser Polycarbonate dient ebenfalls zur Herstellung von Datenspeichern und Compact Discs.

Thermoplastische, aromatische Polycarbonate im Sinne der vorliegenden Erfindung sind sowohl Homopolycarbonate als auch Copolycarbonate; die Polycarbonate können in bekannter Weise linear oder verzweigt sein.

Die Herstellung dieser Polycarbonate erfolgt in bekannter Weise aus Diphenolen, Kohlensäurederivaten, gegebenenfalls Kettenabbrechern und gegebenenfalls Verzweigern.

Einzelheiten der Herstellung von Polycarbonaten sind in vielen Patentschriften seit etwa 40 Jahren niedergelegt. Beispielhaft sei hier nur auf Schnell, "Chemistry and Physics of Polycarbonates", Polymer Reviews, Volume 9, Interscience Publishers, New York, London, Sydney 1964, auf D. Freitag, U. Grigo, P.R. Müller, H. Nouvertne', BAYER AG, "Polycarbonates" in Encyclopedia of Polymer Science and Engineering, Volume 11, Second Edition, 1988, Seiten 648-718 und schließlich auf Dres. U. Grigo, K. Kircher und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen.

Für die Herstellung der Polycarbonate geeignete Diphenole sind beispielsweise Hydrochinon, Resorcin, Dihydroxydiphenyle, Bis-(hydroxyphenyl)-alkane, Bis(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, $\alpha,\alpha'$-Bis-(hydroxyphenyl)-diisopropylbenzole, sowie deren kernalkylierte und kernhalogenierte Verbindungen.

Bevorzugte Diphenole sind 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p/m-diisopropylbenzol, 2,2-Bis-(3,5-dichlor-4-hydroxyphenyl)-propan, 2,2-Bis-(3,5-dibrom-4-hydroxyphenyl)-propan, 1,1-Bis-(4-hydroxyphenyl)-3,3,5-trimethylcyclohexan, 1,1-Bis-(4-hydroxyphenyl)-1-phenyl-ethan und 1,1-Bis-(4-hydroxyphenyl)cyclohexan.

Besonders bevorzugte Diphenole sind 2,2-Bis-(4-hydroxyphenyl)-propan, 2,2-Bis-(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan, 1,1-Bis-(4-hydroxyphenyl)-cyclohexan und 1,1-Bis-(4-hydroxyphenyl)-3,3,5-trimethylcyclohexan.

Diese und weitere geeignete Diphenole sind z.B. in den US-PS 3 028 635, 2 999 835, 3 148 172, 2 991 273, 3 271 367, 4 982 014 und 2 999 846, in den deutschen Offenlegungsschriften 1 570 703, 2 063 050, 2 036 052, 2 211 956 und 3 832 396, der französischen Patentschrift 1 561 518, in der Monographie "H. Schnell, Chemistry and Physics of Polycarbonates, Interscience Publishers, New York 1964" sowie in den japanischen Offenlegungsschriften 62039/1986, 62040/1986 und 105550/1986 beschrieben.

Im Falle der Homopolycarbonate ist nur ein Diphenol eingesetzt, im Falle der Copolycarbonate sind mehrere Diphenole eingesetzt.

Geeignete Kohlensäurederivate sind beispielsweise Phosgen oder Diphenylcarbonat.

Geeignete Kettenabbrecher sind sowohl Monophenole als auch Monocarbonsäuren. Geeignete Monophenole sind Phenol selbst, Alkylphenole wie Kresole, p-tert.-Butylphenol, p-n-Octylphenol, p-iso-Octylphenol, p-n-Nonylphenol und p-iso-Nonylphenol, Halogenphenole wie p-Chlorphenol, 2,4-Dichlorphenol, p-Bromphenol und 2,4,6-Tribromphenol sowie deren Mischungen.

Geeignete Monocarbonsäuren sind Benzoesäure, Alkylbenzoesäuren und Halogenbenzoesäuren.

Bevorzugte Kettenabbrecher sind die Phenole der Formel (I)

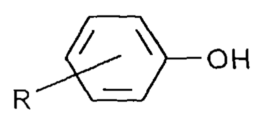 (I),

worin

R ein verzweigter oder unverzweigter $C_8$- und/oder $C_9$-Alkylrest ist.

Die Menge an einzusetzendem Kettenabbrecher beträgt 0,1 Mol-% bis 5 Mol-%, bezogen auf Mole an jeweils eingesetzten Diphenolen. Die Zugabe der Kettenabbrecher kann vor, während oder nach der Phosgenierung erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Hexa-(4-(4-hydroxyphenyl-isopropyl)-phenyl)-orthoterephthalsäureester, Tetra-(4-hydroxyphenyl)-methan, Tetra-(4-(4-hydroxyphenyl-isopropyl)-phenoxy)-methan und 1,4-Bis-(4',4"-dihydroxytriphenyl)-methyl)-benzol sowie 2,4-Dihydroxybenzoesäure, Trimesinsäure, Cyanurchlorid und 3,3-Bis-(3-methyl-4-hydroxyphenyl)-2-oxo-2,3-dihydroindol.

Die Menge der gegebenenfalls einzusetzenden Verzweiger beträgt 0,05 Mol-% bis 2 Mol-%, bezogen wiederum auf Mole an jeweils eingesetzten Diphenolen.

Die Verzweiger können entweder mit den Diphenolen und den Kettenabbrechern in der wäßrig alkalischen Phase vorgelegt werden, oder in einem organischen Lösungsmittel gelöst vor der Phosgenierung zugegeben werden. Im Falle des Umesterungsverfahrens werden die Verzweiger zusammen mit den Diphenolen eingesetzt.

Alle diese Maßnahmen zur Herstellung der thermoplastischen Polycarbonate sind dem Fachmann geläufig.

Die erfindungsgemäße Modifizierung der thermoplastischen, aromatischen Polycarbonate kann einmal dadurch erfolgen, daß man die thermoplastischen Polycarbonate, beispielsweise als Granulat oder als Pulver oder als Lösung etwa in $CH_2Cl_2$, mit den Ethylencarbonaten in den erfindungsgemäßen Mengen bei Raumtemperatur vermischt, gegebenenfalls das Lösungsmittels abdampft, und die Mischung über die Polycarbonatschmelze kurzzeitig homogenisiert und wieder auf Raumtemperatur abkühlt.

Gegenstand der vorliegenden Erfindung ist somit auch ein Verfahren zur Herstellung der erfindungsgemäß modifizierten Polycarbonate, das dadurch gekennzeichnet ist, daß man die Ethylencarbonate den thermoplastischen, aromatischen Polycarbonaten mit $\overline{M}w$ von 12 000 bis 80 000 in Mengen von 0,01 mol-% bis 70 mol-%, vorzugsweise von 0,1 mol-% bis 50 mol-% und insbesondere von 1 mol-% bis 30 mol-%, bezogen jeweils auf 100 Mole aromatischer Carbonatstruktureinheiten des aromatischen Polycarbonats, bei Raumtemperatur zumischt und die Mischung kurzzeitig über die Polycarbonatschmelze homogenisiert und wieder auf Raumtemperatur abkühlt.

Hierbei kann die Einarbeitung der Ethylencarbonate auch über Pulvermischungen und anschließnde Compoundierung erfolgen.

Unter Carbonatstruktureinheit des aromatischen Polycarbonats ist beispielsweise für Bisphenol-A folgende Struktureinheit zu verstehen:

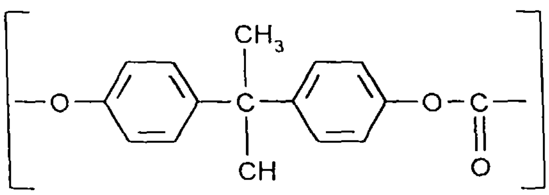

Das Molekulargewicht dieser Struktureinheit beträgt etwa 250.

Ein Polycarbonat mit $\overline{M}n$ (Zahlenmittelmolekulargewicht, ermittelt in bekannter Weise) von 5000 hat somit durchschnittlich 20 Einheiten pro Molekül, ein Polycarbonat mit $\overline{M}n$ von 10.000 hat somit durchschnittlich 40 Einheiten pro Molekül. Ein $\overline{M}n$ von 5.000 entspricht etwa einem $\overline{M}w$ (Gewichtsmittelmolekulargewicht, ermittelt beispielsweise durch Lichtzersetzung) von 10.000 und ein $\overline{M}n$ von 10.000 etwa einem $\overline{M}w$ von 20.000.

Unter kurzzeitiger Homogenisierung versteht man im vorliegenden Zusammenhang, daß das betreffende Ethylencarbonat mit der Polycarbonatschmelze maximal 1 Stunde vermischt wird.

Die erfindungsgemäße Modifizierung der thermoplastischen, aromatischen Polycarbonate kann auch dadurch erfolgen, daß man die Ethylencarbonate in den erfindungsgemäßen Mengen der Schmelze der thermoplastischen, aromatischen Polycarbonate mit $\overline{M}w$ von 12 000 bis 80 000 bei Temperaturen zwischen 240°C und 450°C, vorzugsweise zwischen 280°C und 350°C zusetzt und für 0,5 Minuten bis 600 Minuten, vorzugsweise für 1 Minute bis 15 Minuten bei dieser Temperatur beläßt und erst danach auf Raumtemperatur abkühlt.

Hierbei können die Ethylencarbonate auch als Schmelze zudosiert werden.

Gegenstand der vorliegenden Erfindung ist somit auch ein Verfahren zur Herstellung der erfindungsgemäß modifizierten Polycarbonate, das dadurch gekennzeichnet ist, daß man die Ethylencarbonate in Mengen von 0,01 mol-% bis 70 mol-%, vorzugsweise von 0,1 mol-% bis 50 mol-% und insbesondere von 1 mol-% bis 30 mol-%, bezogen jeweils auf 100 mol aromatischer Carbonatstruktureinheiten des aromatischen Polycarbonats, der Schmelze der thermoplastischen Polycarbonate mit $\overline{M}w$ von 12000 bis 80 000 bei Temperaturen zwischen 240°C und 450°C, vorzugsweise zwischen 280°C und 350°C zusetzt und für 0,5 Minuten bis 600 Minuten, vorzugsweise für 1,00 Minuten bis 15,00 Minuten bei dieser Temperaturen beläßt und erst danach auf Raumtemperatur abkühlt.

Die erfindungsgemäße Modifizierung der thermoplastischen, aromatischen Polycarbonate kann auch dadurch erfolgen, daß man die Ethylencarbonate in den erfindungsgemäßen Mengen den aromatischen Oligocarbonaten der thermoplastischen Polycarbonate mit Polymerisationsgraden von vorzugsweise 2 bis 10, also den Vorstufen der thermoplastischen, aromatischen Polycarbonate, zumischt und die Oligocarbonate danach, gegebenenfalls nach Zusatz von Diphenolen und/oder Diphenylcarbonat und/oder Katalysatoren in bekannter Weise (siehe beispielsweise DE 4 240 587 und DE 4 312 390) zu Polycarbonaten mit einem $\overline{M}w$ zwischen 12 000 und 40 000, vorzugsweise zwischen 14 000 und 30 000 polykondensiert.

Gegenstand der vorliegenden Erfindung ist somit auch ein Verfahren zur Herstellung der erfindungsgemäß modifizierten Polycarbonate, das dadurch gekennzeichnet ist, daß man die Ethylencarbonate in Mengen von 0,01 mol-% bis 70 mol-%, vorzugsweise von 0,1 mol-% bis 50 mol-% und insbesondere von 1 mol-% bis 30 mol-%, bezogen jeweils auf 100 mol aromatischer Carbonatstruktureinheiten des aromatischen Oligocarbonates + gegebenenfalls zugesetzter Diphenole, aromatischen Oligocarbonaten mit Polymerisationsgraden von vorzugsweise 2 bis 10 zumischt und die Oligocarbonate danach, gegebenenfalls nach Zusatz von Diphenolen und/oder Diphenylcarbonat und/oder Katalysatoren in bekannter Weise zu Polycarbonaten mit einem $\overline{M}w$ zwischen 12 000 und 40 000, vorzugsweise zwischen 14 000 und 30 000 polykondensiert.

Die erfindungsgemäße Modifizierung der thermoplastischen, aromatischen Polycarbonate kann auch dadurch erfolgen, daß man die Ethylencarbonate in den erfindungsgemäßen Mengen den Ausgangskomponenten für die Herstellung der thermoplastischen, aromatischen Polycarbonate nach dem Umesterungsverfahren, also den Diphenolen und Diarylcarbonaten zumischt und dann die Polycarbonate mit $\overline{M}w$ zwischen 12 000 und 40 000, vorzugsweise zwischen 14 000 und 30 000 nach dem bekannten Umesterungsverfahren synthetisiert, wobei die molare Menge an Diarylcarbonaten der molaren Menge an Diphenolen in etwa entspricht.

Gegenstand der vorliegenden Erfindung ist somit auch ein Verfahren zur Herstellung der erfindungsgemäß modifizierten Polycarbonate, das dadurch gekennzeichnet ist, daß man die Ethylencarbonate in Mengen von 0,01 mol-% bis 70 mol-%, vorzugsweise von 0,1 mol-% bis 50 mol-% und insbesondere von 1 mol-% bis 30 mol-%, bezogen jeweils

auf 100 mol einzusetzender Diphenole, den Diphenolen und Diarylcarbonaten für die Herstellung der thermoplastischen, aromatischen Polycarbonate nach dem bekannten Umesterungsverfahren zumischt und dann die Polycarbonate mit $\overline{M}w$ zwischen 12 000 und 40 000, vorzugsweise zwischen 14 000 und 30 000 nach dem bekannten Umesterungsverfahren synthetisiert, wobei die molare Menge an Diarylcarbonaten der molaren Menge an Diphenolen in etwa entspricht.

Eine andere Ausführungsform der erfindungsgemäßen Modifizierung ist die Zumischung der Ethylencarbonate in Mengen von 0,01 mol-% bis 70 mol-%, bevorzugt 0,1 mol-% bis 50 mol-% und insbesondere 1 mol-% bis 30 mol-%, bezogen jeweils auf 100 mol einzusetzender Diphenole, zu der organischen Phase der Syntheselösung, die insbesondere aus Methylenchlorid oder Methylenchlorid/Chlorbenzol-Mischungen besteht, zu Beginn des sogenannten Phasengrenzflächenverfahrens oder zur organischen Phase nach der Phosgenierung, also während des Phasengrenzflächenverfahrens. Somit erfolgt die Einarbeitung ohne Temperaturbelastung. Die Aufarbeitung kann ebenfalls ohne Temperaturbelastung über die Sprühagglomeration/Sprühverdampfing oder mit Temperaturbelastung über den Ausdampfextruder erfolgen.

Die Menge an $COCl_2$ und Kettenabbrecher richtet sich nach der Diphenol-Menge. Gegenstand der vorliegenden Erfindung ist somit auch ein Verfahren zur Herstellung der erfindungsgemäß modifizierten Polycarbonate nach dem bekannten Phasengrenzflächenverfahren, das dadurch gekennzeichnet ist, daß man die Ethylencarbonate in Mengen von 0,01 mol-% bis 70 mol-%, bevorzugt 0,1 mol-% bis 50 mol-% und insbesondere 1 mol-% bis 30 mol-%, bezogen jeweils auf 100 mol einzusetzende Diphenole, zu der organischen Phase der Syntheselösung zu Beginn des Phasengrenzflächenverfahrens oder zur organischen Phase nach der Phosgenierung, also während des Phasengrenzflächenverfahrens, zumischt, und danach das Phasengrenzflächenverfahren in bekannter Weise zu Ende führt und die erhaltenen Polycarbonate in bekannter Weise isoliert.

Die erfindungsgemäß modifizierten Polycarbonate können in bekannter Weise zu beliebigen Formkörpern verarbeitet werden.

Beispiele für Formkörper sind, wie bereits erwähnt, Datenspeicher und Compact Discs.

**Beispiel 1**

95 g Polycarbonat mit $\eta_{rel}$ = 1,19 werden mit 5 g Phenylglykolcarbonat

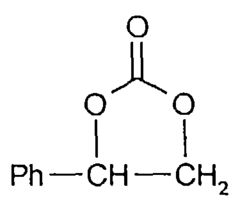

unter Rühren in 50 Minuten auf 320°C geheizt. Nach 15 Minuten werden Fäden und Formkörper aus der Schmelze hergestellt.

Die Formkörper waren hell und klar. Die rel. Viskosität $\eta_{rel}$ beträgt 1,184. Das NMR zeigt neben Polycarbonat auch Phenylglykolcarbonat in ca. 5 %.

Die Formkörper zeigen unter dem Polarisationsmikroskop keine Doppelbrechung.

**Beispiel 2**

Das in Beispiel 1 hergestellte Polycarbonat wird 8 Stunden bei 320°C gehalten. Es entsteht ein gelbliches Produkt.

Das NMR zeigt kein Phenylglykolcarbonat mehr an. Dagegen finden sich die Signale einer eingebauten Phenylseitenkettengruppe bei $\delta$ = 6,8; 7,1; 7,4 ppm.

Der Formkörper zeigt unter dem Polarisationsmikroskop keine Doppelbrechung.

**Patentansprüche**

1. Thermoplastische, aromatische Polycarbonate mit einem $\overline{M}w$ von 12 000 bis 80 000, dadurch gekennzeichnet, daß sie mit Ethylencarbonat, das durch einen oder zwei $C_6$-$C_{18}$-Arylreste substituiert ist, in Mengen von 0,01 mol-% bis 70 mol-%, bezogen jeweils auf 100 mol aromatische Carbonatstruktureinheiten des aromatischen Polycarbonats, modifiziert sind.

2. Verwendung der modifizierten Polycarbonate des Anspruchs 1 zur Herstellung von Formteilen für optische

Zwecke.

3. Verfahren zur Herstellung der modifizierten Polycarbonate des Anspruchs 1, dadurch gekennzeichnet, daß man die Ethylencarbonate den thermoplastischen, aromatischen Polycarbonaten mit $\overline{M}w$ von 12 000 bis 80 000 in Mengen von 0,01 mol-% bis 70 mol-%, bezogen jeweils auf 100 mol aromatischer Carbonatstruktureinheiten des aromatischen Polycarbonats, bei Raumtemperatur zumischt und die Mischung kurzzeitig über die Polycarbonatschmelze homogenisiert und wieder auf Raumtemperatur abkühlt.

4. Verfahren zur Herstellung der modifizierten Polycarbonate des Anspruchs 1, dadurch gekennzeichnet, daß man die Ethylencarbonate in Mengen von 0,01 mol-% bis 70 mol-%, bezogen jeweils auf 100 mol aromatischer Carbonatstruktureinheiten des aromatischen Polycarbonats, der Schmelze der aromatischen Polycarbonate mit $\overline{M}w$ von 12 000 bis 80 000 bei Temperaturen zwischen 240°C und 450°C zusetzt und für 0,5 Minuten bis 600 Minuten bei diesen Temperaturen beläßt und erst danach auf Raumtemperatur abkühlt.

5. Verfahren zur Herstellung der modifizierten Polycarbonate des Anspruchs 1, dadurch gekennzeichnet, daß man die Ethylencarbonate in Mengen von 0,01 mol-% bis 70 mol-%, bezogen jeweils auf 100 mol aromatischer Carbonatstruktureinheiten des aromatischen Oligocarbonats + gegebenenfalls zugesetzter Diphenole, aromatischen Oligocarbonaten mit Polymerisationsgraden von vorzugsweise 2 bis 10 zumischt und die Oligocarbonate danach, gegebenenfalls nach Zusatz von Diphenolen und/oder Diphenylcarbonat und/oder Katalysatoren in bekannter Weise zu Polycarbonaten mit einem $\overline{M}w$ zwischen 12 000 und 40 000 polykondensiert.

6. Verfahren zur Herstellung der modifizierten Polycarbonate des Anspruchs 1, dadurch gekennzeichnet, daß man die Ethylencarbonate in Mengen von 0,01 mol-% bis 70 mol-%, bezogen jeweils auf 100 mol einzusetzender Diphenole, den Diphenolen und Diarylcarbonaten für die Herstellung der thermoplastischen Polycarbonate nach dem bekannten Umesterungsverfahren zumischt und dann die Polycarbonate mit $\overline{M}w$ zwischen 12 000 und 40 000 nach dem bekannten Umesterungsverfahren synthetisiert, wobei die molare Menge an Diarylcarbonaten der molaren Menge an Diphenolen in etwa entspricht.

7. Verfahren zur Herstellung der modifizierten Polycarbonate des Anspruchs 1 nach dem bekannten Phasengrenzflächenverfahren, dadurch gekennzeichnet, daß man die Ethylencarbonate in Mengen von 0,01 mol-% bis 70 mol-%, bezogen jeweils auf 100 mol einzusetzende Diphenole zu der organischen Phase der Syntheselösung zu Bginn des Phasengrenzflächenverfahrens oder zur organischen Phase nach der Phosgenierung, also während des Phasengrenzflächenverfahrens, zumischt und danach das Phasengrenzflächenverfahren in bekannter Weise zu Ende führt und die erhaltenen Polycarbonate in bekannter Weise isoliert.